# EUROPÄISCHE PATENTANMELDUNG

(11) **EP 1 201 469 A2**
(43) Veröffentlichungstag der Anmeldung: **02.05.2002**
(21) Anmeldenummer: 01122914.3
(22) Anmeldetag: 25.09.2001
(51) Int. Cl.: B60G 17/00

(54) **Hebevorrichtung für die Räder eines Anhängers**

(30) Priorität: 26.10.2000 DE 10053454
(71) Anmelder: DEERE & COMPANY, Moline, Illinois 61265-8098 (US)
(72) Erfinder: Guiet, Lionel, 70100 Gray (FR)
(74) Vertreter: Magin, Ludwig Bernhard

(57) **Zusammenfassung**

1. Gezogenes Gerät
2.1. Bekannte gezogene Geräte weisen ein Fahrgestell auf, das sich über Räder und diese tragende Radaufhängungen auf dem Boden abstützt. Zwischen dem Fahrgestell und den Radaufhängungen sind Federungsvorrichtungen vorgesehen, die während des Betriebs auftretende Stöße auffangen. Bisher bekannt gewordene Ausführungsformen der Federungsvorrichtungen sind relativ aufwendig.
2.2. Es wird ein gezogenes Gerät (10) vorgeschlagen, dessen Federungsvorrichtung 18 mit einem Torsionsfederelement 56 versehen ist.
2.3. Derartige gezogenene Geräte (10) werden in der Landwirtschaft eingesetzt.

## Beschreibung

Die Erfindung betrifft ein gezogenes Gerät mit einem Fahrgestell, wenigstens einer Radaufhängung, einer Federungsvorrichtung und einer Stellvorrichtung.

Die DE-A1-31 39 936 offenbart ein gezogenes landwirtschaftliches Gerät mit einem Fahrgestell, an dessen beiden Endbereichen jeweils eine Radaufhängung vorgesehen ist. Beide Radaufhängungen weisen im Bereich ihrer Schwenkachse eine Welle auf, die an den einander zugelegenen Enden über einen federbelasteten Lenker relativ beweglich zueinander miteinander verbunden sind. Eine Stellvorrichtung kann in einer Richtung mit Anschlägen an den Radaufhängungen in Eingriff gebracht werden und diese in einer Richtung verstellen.

Aus der EP-A1-0 149 870 geht ein gezogenes Mähgerät hervor, bei dem eine Stellvorrichtung und eine Federungsvorrichtung in Reihe zueinander geschaltet sind. In einem der dort gezeigten Ausführungsbeispiele wirkt ein Stellzylinder auf eine Schwenkwelle, die an den jeweiligen Endbereichen, über mit Gasdruckfedern bestückte Streben, Radschwingen vertikal verschwenkt.

Das der Erfindung zugrundeliegende Problem wird darin gesehen, daß die bekannten Federungsvorrichtungen baulich aufwendig sind.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise bedarf es keiner Gasdruckspeicher oder aufwendiger Wellen- und Federungssysteme, um die von der Fahrt über eine rauhe Fahrbahn herrührenden Stöße auffangen zu können. Vielmehr werden die Lastspitzen von einem Torsionsfederelement aufgefangen, was an sich schon ausreichend ist und gleichzeitig als Übertragungselement dient, was zusätzlich Teile einspart.

In einfacher Weise wird das Torsionsfederelement als eine Torsionswelle ausgebildet oder enthält eine solche. Eine Torsionswelle kann im Querschnitt sowohl rund als auch flach oder kreuzförmig ausgebildet sein. Die Querschnittsform- und größe, wie auch das Material hängen von dem geforderten Stellweg und der geforderten Zähigkeit ab. Höchste Ansprüche werden durch die Verwendung von Stahl erfüllt. Daneben können auch synthetische Werkstoffe oder Verbundwerkstoffe gewählt werden.

Anstelle einer in sich verdrehbaren Welle kann auch eine mehr oder weniger starre Welle verwendet werden, die infolge ihrer Dreh- oder Schwenkbewegung auf einen in Umfangsrichtung gelegenen nachgiebigen Widerstand stößt. Beispielsweise können zwischen zwei gegeneinander verdrehbare Wellen eine Feder vorgesehen sein, wobei die Feder als Zug-, Druck- oder Spiralfeder ausgebildet ist.

Wenn mittels eines gemeinsamen Torsionselements zwei oder gar mehr Radaufhängungen beaufschlagt werden, führt dies nicht nur zu einer Teileeinsparung, sondern zugleich zu der Möglichkeit, Relativbewegungen zwischen den beteiligten Radaufhängungen zuzulassen, bzw. aufzufangen. Eine mittige Anordnung der Stellvorrichtung bewirkt eine gleichmäßige Kraftverteilung auf die Radaufhängungen jeder Seite.

Eine besondere Art eines Torsionsfederelements ist in der Verwendung einer in der Drehrichtung elastisch wirkenden Kupplung zu sehen. Eine solche Kupplung kann in verschiedenen Elastizitätstufen ausgebildet und zwischen geeigneten Teilen beliebig eingefügt werden. Z. B. ist eine Klauenkupplung mit Federelementen zwischen den Klauen für einen solchen Zweck geeignet und läßt es auf einfache Weise zu, die Verbindung in dem Torsionselement zu trennen.

Selbst bei hohen angreifenden Kräften wird eine ungewollte Deformation des Torsionsfederelementes vermieden, wenn eine gewählte Torsionswelle in Lagern geführt ist und somit nur eine Drehbewegung in sich durchführen kann.

In der Zeichnung ist ein nachfolgend näher beschriebenes Ausführungsbeispiel der Erfindung dargestellt. Es zeigt:
- Fig. 1: ein gezogenes Gerät in Seitenansicht und in schematischer Darstellung und

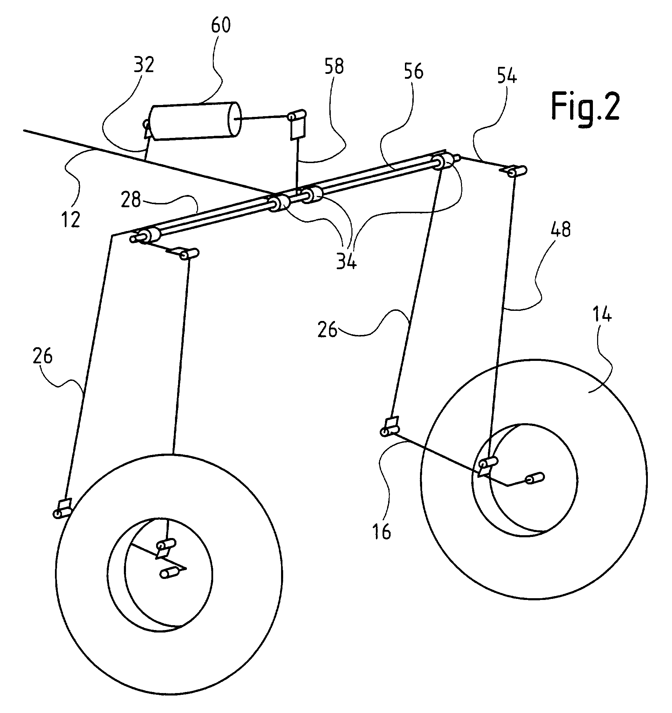

- Fig. 2: eine Federungsvorrichtung in schematischer Darstellung.

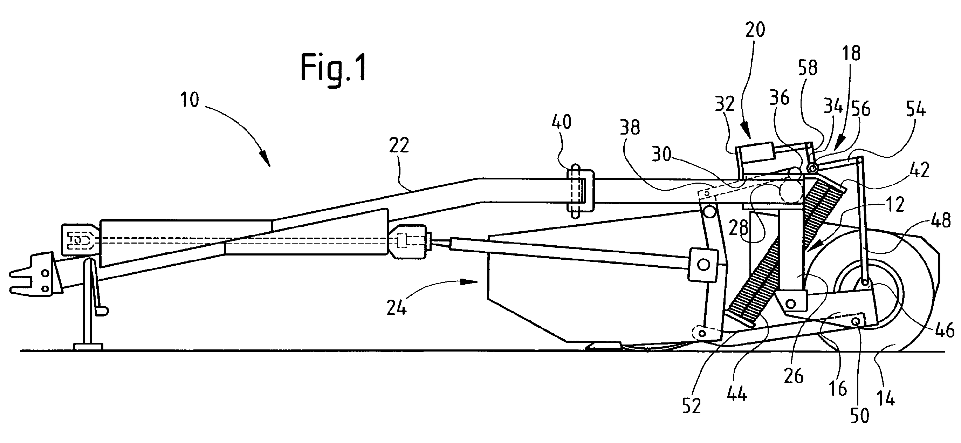

Ein gezogenes Gerät 10 gemäß Figur 1 enthält ein Fahrgestell 12, Räder 14, Radaufhängungen 16, eine Federungsvorrichtung 18, Stellvorrichtungen 20, eine Deichsel 22 und ein Arbeitsaggregat 24.

Das Gerät 10 ist in der Art eines Mähkonditionierers ausgebildet, der dazu bestimmt ist, Halmgut vom Boden zu trennen, es zu bearbeiten und auf den Boden abzulegen. Während des Betriebes wird das Gerät 10 mit relativ hoher Geschwindigkeit über unebenes Gelände gezogen und erfährt andauernd Stöße, die neben der Nachgiebigkeit der Räder 14 selbst von der Federungsvorrichtung 18 aufgefangen werden müssen. Die Erfindung ist keinesfalls auf die Anwendung bei einem solchen Gerät 10 beschränkt, sondern kann auch bei anderen gezogenen Geräten, z. B. Pressen, Bodenbearbeitungswerkzeugen, Sägeräten, Spritzgeräten und dergleichen angewandt werden.

Das Fahrgestell 12 ist im wesentlichen als ein Rahmen in der Art eines auf dem Kopf stehenden "U" mit vertikalen Schenkeln 26 und einem horizontalen Querträger 28 ausgebildet, in deren Zwischenraum das Arbeitsaggregat 24 zumindest teilweise untergebracht ist. Das Fahrgestell 12 trägt auf nachfolgend näher beschriebene Weise das Arbeitsaggregat 24 und kann mit diesem in unterschiedlich hohe Stellungen gegenüber dem Boden gebracht werden.

Im unteren Bereich jedes Schenkels 26 ist ein Rad 14 über eine Radaufhängung 16 vertikal schwenkbar angeschlossen.

In der Mitte zwischen den Schenkeln 26 befindet sich an dem Querträger 28 ein Träger 30, der in der Form einer Platte mit einem Halter 32 ausgeführt ist. An der rückwärtigen Seite des Querträgers 28 befinden sich mehrere Lager 34, die möglichst gleichmäßig auf der Länge verteilt sind, sich jedenfalls aber im Bereich des Träger 30 und der Schenkel 26 befinden. Außerdem ist an dem Querträger 28 ein Lager 36 für einen oberen Lenker 38 und ein Lager 40 für die horizontal bewegliche Aufnahme der Deichsel 22 vorgesehen. Schließlich sind an jeder Seite des Querträgers 28 Aufnehmer 42 für Federn 44 vorgesehen.

Die Räder 14 sind in herkömmlicher Weise mit luftgefüllten Reifen versehen und an dem freien Ende der Radaufhängung 16 drehbar angebracht. Das Fahrgestell 12 stützt sich mittels der Räder 14 auf dem Boden ab.

Jede Radaufhängung 16 ist in der Art einer Schwinge ausgebildet, die in einem vorderen Endbereich vertikal schwenkbar an dem Schenkel 26 angebracht ist, in einem rückwärtigen Endbereich ein Rad 14 trägt, in einem rückwärtigen oberen Bereich einen Anschluß 46 für eine Strebe 48 und in einem rückwärtigen unteren Endbereich einen Anschluß 50 für einen unteren Lenker 52 aufweist. Teil der Radaufhängung 16 ist auch die Strebe 48 und ein Arm 54, die an den einander zugelegenen Enden vertikal schwenkbar miteinander verbunden sind. Die Strebe 48 kann längenveränderlich ausgeführt werden, besteht in der einfachsten Form jedoch aus einer Metallstange mit Gabelenden oder dergleichen, mit denen ein Anschluß an den Arm 54 und die Radaufhängung 16 möglich ist.

Die Federungsvorrichtung 18 enthält ein Torsionsfederelement 56, das in dem dargestellten Ausführungsbeispiel als eine Torsionswelle ausgebildet ist. Das Torsionsfederelement 56 erstreckt sich im wesentlichen über die gesamte Länge des Querträgers 28 und ist in den Lagern 34 drehbar aufgenommen. In den Endbereichen greift jeweils ein Arm 54 radial und unbeweglich an dem Torsionsfederelement 56 an. In der Mitte bzw. im Bereich des Trägers 30 ist ein Stellarm 58 ebenfalls radial und starr vorgesehen. Die Arme 54 und der Stellarm 58 weisen in diesem Ausführungsbeispiel zueinander einen Versatz von ca. 90 Grad in der Umfangsrichtung auf. Die Lage der Arme 54 und des Stellarms 58 ist jedoch grundsätzlich frei wählbar, solange die gewünschte Funktion erreicht und vorgegebene Abmessungen nicht überschritten werden. Das Torsionsfederelement 56 ist in diesem Ausführungsbeispiel als eine im Querschnitt runde Welle aus Stahl gebildet, die eine hohe Elastizität besitzt.

Die Stellvorrichtung 20 enthält einen Stellmotor 60, der sich zwischen dem auskragenden Ende des Stellarms 58 und dem Halter 32 erstreckt. Der Stellmotor 60 ist als ein einfachwirkender Hydraulikmotor ausgebildet, der zum Ausfahren unter Druck gesetzt wird. Es wäre zusätzlich zu der Federungsvorrichtung 18 denkbar, den Stellmotor 60 mit einer pneumatischen oder mechanischen Feder auszurüsten oder an den Halter 32 bzw. den Stellarm 58 anzuschließen. Der Stellmotor 60 wird auf herkömmliche Weise von einem nicht gezeigten Zugfahrzeug gesteuert, um ein Anheben bzw. Absenken des Fahrgestells 12 zu bewirken.

Die Deichsel 22 ist in ihrem rückwärtigen Endbereich in dem Lager 40 des Fahrgestells 12 horizontal schwenkbar gelagert und dient dem Anschluß des Geräts 10 an ein nicht dargestelltes Zugfahrzeug, z.B. einen Ackerschlepper.

Das Arbeitsaggregat 24 ist in der Form eines Mähwerks mit einer Gutbehandlungsvorrichtung ausgebildet, dessen Arbeitshöhe mittels der Stellvorrichtung 20 eingestellt werden kann. Die Aufhängung des Arbeitsaggregats 24 an dem Fahrgestell 12 erfolgt mittels des oberen Lenkers 38, der unteren Lenker 52 und der Federn 44, wozu entsprechende Befestigungsmittel vorgesehen sind, die nicht näher bezeichnet werden, weil sie an sich bekannt sind.

Nach alledem ergibt sich folgender Aufbau und eine daraus resultierende Funktion.

Das Fahrgestell 12 stützt sich auf dem Boden über die Räder 14 ab, wobei seiner Abwärtsbewegung eine im wesentlichen starre Verbindung entgegenwirkt, die sich aus dem Halter 32, dem Stellmotor 60, dem Stellarm 58, dem Torsionsfederelement 56, den Armen 54, den Streben 48 und den Radaufhängungen 16 zusammensetzt. Abgesehen von der jedem Bauteil ohnehin inhärenten Elastizität wird lediglich in dem jeweiligen Bereich zwischen den Armen 54 und dem Stellarm 58 eine Federung aufgrund der Verdrehung des Torsionsfederelements 56 zugelassen. Demnach wird sich das Torsionsfederelement 56 mehr oder weniger in sich verdrehen, wenn die Räder 14 über einen Stein oder eine sonstige Unebenheit fahren. In einem Fall, daß die Räder 14 nach unten ausweichen können, z. B. bei einer Vertiefung, wird das Torsionsfederelement 56 verhindern, daß eine zu hohe Abwärtsbeschleunigung entsteht.

In einer Fortentwicklung der Erfindung kann das Maß der elastischen Auslenkung dadurch variiert werden, daß der wirksame Hebelarm der Arme 54 oder des Stellarms 58 verkürzt oder verlängert oder der Angriffspunkt der Strebe 48 an der Radaufhängung 16 verlegt wird.

## Patentansprüche

1. Gezogenes Gerät (10) mit einem Fahrgestell (12), wenigstens einer Radaufhängung (16), einer Federungsvorrichtung (18) und einer Stellvorrichtung (20), **dadurch gekennzeichnet, daß** die Federungsvorrichtung (18) ein Torsionsfederelement (56) aufweist, das einerseits mit der Stellvorrichtung (20) und andererseits mit der Radaufhängung (16) in Wirkverbindung steht.

2. Gezogenes Gerät nach Anspruch 1, **dadurch gekennzeichnet, daß** das Torsionsfederelement (56) als eine Torsionswelle ausgebildet ist.

3. Gezogenes Gerät nach Anspruch 1 oder 2, **dadurch gekennzeichnet, daß** das Torsionsfederelement (56) eine Torsionsfeder oder eine in Drehrichtung wirkende Feder aufweist.

4. Gezogenes Gerät nach einem oder mehreren der vorherigen Ansprüche, **dadurch gekennzeichnet, daß** zwei Radaufhängungen (16) vorgesehen sind, die über ein gemeinsames Torsionsfederelement (56) betätigbar sind, wobei die Stellvorrichtung (20) im wesentlichen mittig zwischen den Radaufhängungen (16) an dem Torsionsfederelement (56) angreift.

5. Gezogenes Gerät nach einem oder mehreren der vorherigen Ansprüche, **dadurch gekennzeichnet, daß** das Torsionsfederelement (56) wenigstens mit einer in Drehrichtung beaufschlagbaren und mit nachgiebigen Federelementen bestückten Kupplung versehen ist.

6. Gezogenes Gerät nach einem oder mehreren der vorherigen Ansprüche, **dadurch gekennzeichnet, daß** ein als Torsionswelle ausgebildetes Torsionsfederelement (56) in Lagern (34) an dem Fahrgestell (12) schwenkbar aufgenommen ist.
